# EUROPÄISCHE PATENTSCHRIFT

(11) **EP 1 557 065 B1**
(45) Veröffentlichungstag und Bekanntmachung des Hinweises auf die Patenterteilung: **30.07.2008**
(21) Anmeldenummer: 03767384.5
(22) Anmeldetag: 27.10.2003
(51) Int. Cl.: H04Q 7/38

(54) **VERFAHREN ZUR VERBESSERUNG DER QOS MECHANISMEN BEI DER BANDBREITENZUWEISUNG IN CDMA-MOBILKOMMUNIKATIONSSYSTEMEN**
METHOD FOR IMPROVING QOS MECHANISMS DURING BANDWITH ALLOCATION IN CDMA MOBILE COMMUNICATION SYSTEMS
PROCEDE POUR AMELIORER LES MECANISMES QOS LORS DE L'AFFECTATION DE BANDE PASSANTE DANS DES SYSTEMES DE COMMUNICATION MOBILE CDMA

(30) Priorität: 29.10.2002 DE 10250501
(43) Veröffentlichungstag der Anmeldung: 27.07.2005
(73) Patentinhaber: T-Mobile Deutschland GmbH, 53227 Bonn (DE)
(72) Erfinder: KLEO, Rémi, 53332 Bornheim (DE)
(74) Vertreter: Riebling, Peter
(86) Internationale Anmeldenummer: PCT/DE2003/003570
(87) Internationale Veröffentlichungsnummer: WO 2004/040932

(56) Entgegenhaltungen:
- EP-A- 1 154 663
- US-A- 6 069 883
- US-A- 6 097 733
- "Digital cellular telecommunications system (Phase 2+); Universal Mobile Telecommunications System (UMTS); End to end Quality of Service (QoS) concept and architecture" ETSI TS 123 207 V5.5.0 RELEASE 5, September 2002 (2002-09), Seiten 1-48, XP002274565

## Beschreibung

Die Erfindung betrifft ein Verfahren zur Verbesserung der QoS (Quality of Service) Mechanismen bei der Bandbreitenzuweisung in CDMA-Mobilkommunikationssystemen, wie z. B. einem UMTS-Mobilkommunikationssystem.

Ein UMTS-Netzwerk setzt sich aus mehreren Radio Network Subsysteme (RNS) zusammen. Jedes RNS besteht aus einem Radio Network Controller (RNC) und einem oder mehreren Node B. Ein Node B enthält eine oder mehrere Funkstationen, welche jeweils eine Funkzelle (Sektor) abdecken. Der RNC übernimmt die Steuerung für Handover und die Funktionen im Zusammenhang mit Macrodiversity zwischen verschiedenen Node B. Die einzelnen RNS selbst können über den entsprechenden RNC direkt Daten untereinander austauschen. Die Anbindung der Node B an ihren RNC erfolgt über eine Uu-Schnittstelle.
Ein Node B verwaltet eine Gruppe von Funkzellen, die im FDD-Modus, im TDD-Modus oder in beiden Duplexarten betrieben werden können. Er ist in der Lage Softhandover und Macrodiversity innerhalb seiner Zellen unabhängig vom RNC zu kontrollieren. Der Zweck der Signalisierungsprozedur besteht in der Einrichtung eines Radio Access Bearers vom CN bis zum Endgerät. Dazu enthält die RAB ASSIGNMENT REQUEST Nachricht die festgelegte RAB-ID, sowie alle erforderlichen Routing-Parameter und die gewünschte Quality of Service (QoS). Es ist möglich eine QoS zu verhandeln, in diesem Falle enthält die Antwort RAB ASSIGNMENT RESPONSE die tatsächlich diesem RAB zugewiesene QoS. Die Nachricht RAB ASSIGNMENT REQUEST wird stets vom CN aus gesendet und kann außer zum Aufbau eines RAB auch zu dessen Modifikation oder Abbau verwendet werden. Mit einer einzelnen Prozedur können mehrere RAB's zu einem Benutzerendgerät eingerichtet werden. Ein RAB stellt somit einen Nutzkanal durch das UMTS Netz hindurch bis zum Benutzerendgerät dar.

Ein UMTS TD-CMDA System umfasst 64 Sprachkanäle pro Träger. Mit diesen 64 Kanälen kann man nun flexibel verschiedene Datenraten von 9,6 kbit/s bis 2 Mbit/s einstellen, indem man die Kanäle entsprechend kombiniert.

Gemäß dem Verfahren zur Aktivierung eines sogenannten Packet Data Protocol context (PDP-context), wie es aus der Spezifikation ETSI TS 123 207 V5.5.0 (2002-09) "Digital Cellular Telecommunications System (Phase 2+), Universal Mobile Telecommunications System (UMTS), End to End Quality of Service (QoS) Concept and Architecture", 3GPP TS 23.207 entnommen werden kann, sendet das Benutzerendgerät die Nachricht ACTIVATE PDP CONTEXT REQUEST, welche die angeforderten QoS Paramenter enthält. Die enthaltenen QoS Informationselemente umfassen jedoch bisher nur Informationen über die dem Benutzerendgerät zugestandene garantierte Bitrate und die maximale Bitrate für Uplink und Downlink. An dieser Stelle sei darauf hingewiesen, dass im Rahmen dieser Erfindung die Begriffe Bandbreite, Bitrate und Datenrate in äquivalenter Weise verwendet werden.

US 6 069 883 A offenbart ein CDMA Mobilfunksystem mit Möglichkeit der Zuweisung einer erhöhten Bandbreite zu einer diese Bandbreite anfordernden Mobilstation. Hier geht es nicht darum, eine von der Mobilstation mitgeteilte minimale Bandbreite zu garantieren, sondern der Mobilstation eine möglichst hohe Bandbreite zur Verfügung zu stellen.

EP 1 154 663 A1 offenbart ein Verfahren zur Steuerung der Quality of Service (QoS) in einem mobilen Kommunikationsnetzwerk, wobei für jede neue Verbindung geprüft wird, ob eine gewünschte Bandbreite zur Verfügung gestellt werden kann. Dabei wird in Kauf genommen, die Bandbreite bestehender Verbindungen gegebenenfalls in vorgegebenen Grenzen zu verringern. Daher wird für jede Verbindung ein sogenannter QoS-Deskriptor vorgegeben, der bestimmt, um wie viel die dieser Verbindung zugeordnete Bandbreite bei Bedarf vermindert werden darf.

Die Aufgabe der Erfindung liegt in der Schaffung eines Verfahrens zur Verbesserung der Quality of Service QoS Mechanismen bei der Bandbreitenzuweisung in Code Division Multiple Access CDMA-Mobilkommunikationssystemen, womit die verfügbare Bandbreite in einer Funkzelle optimiert werden kann.

Diese Aufgabe wird erfindungsgemäß durch die Merkmale des Patentanspruchs 1 gelöst.

Vorteilhafte Ausgestaltungen und Weiterbildungen der Erfindung ergeben sich aus den Unteransprüchen.

Durch die Erfindung kann ein Benutzerendgerät dem Mobilkommunikationsnetz signalisieren, welche minimale Bitrate es für Downlink und Uplink benötigt. Anhand der vom Endgerät vorgegebenen minimalen Bitrate und der im Standard festgelegten maximalen Bitrate kann der Radio Network Controller RNC die Verwaltung der verfügbaren Bandbreite optimieren. Somit werden die Möglichkeiten des Benutzerendgeräts und die in der Funkzelle verfügbare Bandbreite möglichst gut ausgenutzt.

Erfindungsgemäß wird davon ausgegangen, dass in jeder Funkzelle eine Gesamtbandbreite zur Verfügung steht. Jedem Benutzerendgerät, das die Funkzelle beeinflusst, wird, sofern möglich, eine gewünschte bzw. benötigte effektive Bandbreite zugewiesen. Die Aufgabe der Ressourcenverwaltung ist nun, sicherzustellen, dass die Summe der effektiven Bandbreiten immer kleiner ist als die Gesamtbandbreite in der Funkzelle.

In der QoS Anforderung gibt das Benutzerendgerät die minimale Bitrate vor, die von ihm und der jeweiligen Anwendung angefordert wird. Sofern die angegebene minimale Bitrate auf der Luftschnittsstelle nicht verfügbar ist, kann die Anwendung nicht ausgeführt werden.

Während der PDP Context Aktivierung sendet der zugeordnete Netzknoten die Nachricht RAB ASSIGNMENT REQUEST zum RNC, welche, wie bisher bekannt, die dem Benutzerendgerät bzw. der Luftschnittstelle zugeordnete maximale Bitrate und die garantierte Bitrate für Uplink und Downlink enthält.

Zusätzlich enthält diese Nachricht erfindungsgemäß Angaben über die minimale Bitrate und die maximale Bitrate, die dem Benutzerendgerät und der jeweiligen Anwendung zur Verfügung steht. Diese minimalen bzw. maximalen Bitraten entsprechen den angeforderten Bitraten, sofern in der Funkzelle die notwendige Bandbreitenkapazität zur Verfügung steht.

Der RNC handhabt die Zuordnung des RAB (Radio Access Bearer) und der Codes entsprechend der angeforderten Bandbreite.

Erfindungsgemäß ist der RNC für die Zuordnung von RAB und der Bandbreite entsprechend einer Liste von Regeln zuständig, die von einem Netzbetreiber festgelegt und geändert werden können.

Die Regeln basieren im wesentlichen auf folgenden Eingangsparametern:
- Class of Service
- Verfügbare Bandbreite und/oder Codes
- Der angeforderten maximalen Bitrate
- Die angeforderte minimale Bitrate
- Die angeforderte garantierte Bitrate

Anhand dieser Regeln wird der Luftschnittstelle ein entsprechender RAB zugeordnet.

Die Regeln können von der Zeit abhängig sein. Z.B. können die Regeln es erlauben einem Benutzerendgerät in der Nacht, d.h. bei geringerer Verkehrsbelastung, höhere Bitraten zuzuordnen. Die Regeln können auch vom jeweiligen Teilnehmerverhältnis und/oder dem Tarif abhängen.

Falls in der Funkzelle eine ausreichende Bandbreite (oder Codes) verfügbar sind, kann die zugeordnete Bitrate nicht größer sein als die "maximale" Bitrate aber größer als die "garantierte" Bitrate, die in der angefragten QoS angegeben waren, solange sie zwischen der minimalen und der maximalen von dem Benutzerendgerät angeforderten Bitrate liegt.

Die zugeordneten QoS-Parameter werden dann von einem Netzknoten (z.B. einem SGSN) mittels der Nachricht "ACTIVATE PDP CONTEXT ACCEPT" zurück zum Benutzerendgerät gesendet.

Die zugeordnete Bitrate kann später auch durch die im 3GPP (3rd Generation Partnership Project [www.3GPP.org]) definierte "PDP-context modification procedure" geändert werden, z.B. wenn die noch verfügbare Bandbreite von anderen Teilnehmern angefordert wird.

Die Erfindung wird nun anhand eines einfachen Beispiels näher erläutert.

Folgender Fall ist gegeben: Eine Luftschnittstelle einer Funkzelle hat zu einem Zeitpunkt t0 eine gesamte verfügbare Bandbreite von 256 kbit/s.

Zum Zeitpunkt t0 fordert ein Benutzer 1 eine RAB mit einer garantierten und maximalen Bitrate von 64 kbit/s an, um eine Datei mit einem Umfang von 256 kbit herunterzuladen. Den aktuellen Regeln folgend, wie sie z.B. im 3GPP definiert sind, ordnet der RNC dem Benutzer einen Code zu, der einer Bitrate von 64 kbit/s entspricht. Bei der angeforderten Bitrate ist der Download in 4 Sekunden, also zum Zeitpunkt t0+4s, abgeschlossen.

Zum Zeitpunkt t0+1 s fordern Benutzer 2 und Benutzer 3 ebenfalls eine RAB mit einer garantieren Bandbreite von 64 kbit/s an. Diese Anforderungen können bedient werden.
Die verbleibende Bandbreite auf der Luftschnittstelle zum Zeitpunkt t0+1s ist demnach 64 kbit/s.

Zum Zeitpunkt t0+2s fordert ein Benutzer 4 eine RAB mit einer garantierten und maximalen Bitraten von 128 kbit/s an. Dieser Anforderung kann nicht entsprochen werden, da auf der Luftschnittstelle momentan lediglich eine Bandbreite von 64 kbit/s verfügbar ist.

Hätte jedoch der Benutzer 1 zum Zeitpunkt t0 dem Netz signalisiert, dass er eine maximale Bandbreite von 128 kbit/s für das Herunterladen der Datei von 256 kbit anfordert, so hätte der RNC dem Benutzer einen Code für 128 kbit/s zugeordnet. Unter Berücksichtigung der den Benutzern 1 und 2 zugeordneten Bandbreiten von jeweils 64 kbit/s wäre zum Zeitpunkt t0+2 der Download des Benutzers 1 abgeschlossen und eine Bandbreite von 128 kbit/s verfügbar gewesen.
Dem Benutzer 4 hätte somit die gewünschte Bandbreite von 128 kbit/s zugeordnet werden können.

## Patentansprüche

1. Verfahren zur Verbesserung der Quality of Service QoS Mechanismen bei der Bandbreitenzuweisung in Code Division Multiple Access CDMA-Mobilkommunikationssystemen,
**dadurch gekennzeichnet,**
**dass** ein Benutzerendgerät dem Mobilkommunikationssystem signalisiert, welche minimale Bandbreite es benötigt, und das Mobilkommunikationssystem einer Verbindung zum Benutzerendgerät, sofern verfügbar, eine Bandbreite innerhalb der benötigten Bandbreitezuweist, dass ein Netzknoten Radio Network Controller RNC die Zuordnung eines Radio Access Bearer RAB und von Codes entsprechend der benätigten Bandbreite handhabt, wobei die Zuordnung von RAB und der Bandbreite entsprechend einer Anzahl von Regeln erfolgt.

2. Verfahren nach Anspruch 1, **dadurch gekennzeichnet, dass** die Bandbreite innerhalb der Nachricht ACTIVATE PDP CONTEXT REQUEST signalisiert wird.

3. Verfahren nach einem der Ansprüche 1 oder 2, **dadurch gekennzeichnet, dass** zugeordnete QoS-Parameter vom Netzknoten mittels der Nachricht ACTIVATE Packet Data Protocol PDP CONTEXT ACCEPT zurück zum Benutzerendgerät gesendet werden.

4. Verfahren nach einem der Ansprüche 1 bis 3, **dadurch gekennzeichnet, dass** die Regeln auf mindestens einem der folgenden Eingangsparameter basieren: Class of Service, Verfügbare Bandbreite und/oder Codes, angeforderte maximale Bitrate und/oder angeforderte garantierte Bitrate.

5. Verfahren nach Anspruch 4, **dadurch gekennzeichnet, dass** die Regeln zeitabhängig sind.

6. Verfahren nach Anspruch 4 oder 5, **dadurch gekennzeichnet, dass** die Regeln vom jeweiligen Teilnehmerverhältnis und/oder dem angewandten Tarif abhängen.

## Claims

1. Method for improving the quality of service QoS mechanisms for bandwidth allocation in code division multiple access CDMA mobile communications systems,
**characterised**
**in that** a user terminal signals to the mobile communications system what minimum bandwidth it needs, and the mobile communications system allocates a bandwidth within the bandwidth needed to a connection to the user terminal, if available,
**in that** a radio network controller RNC network node handles the allocation of a radio access bearer RAB and of codes according to the bandwidth needed, the allocation of RAB and bandwidth being effected according to a number of rules.

2. Method according to claim 1, **characterised in that** the bandwidth is signalled within the ACTIVATE PDP CONTEXT REQUEST message.

3. Method according to one of claims 1 or 2,
**characterised in that** allocated QoS parameters are sent back to the user terminal by the network node by means of the ACTIVATE Packet Data Protocol PDP CONTEXT ACCEPT message.

4. Method according to one of claims 1 to 3,
**characterised in that** the rules are based on at least one of the following input parameters: class of service, available bandwidth and/or codes, requested maximum bit rate and/or requested guaranteed bit rate.

5. Method according to claim 4, **characterised in that** the rules are time-dependent.

6. Method according to claim 4 or 5, **characterised in that** the rules depend on the respective subscriber ratio and/or the tariff applied.

## Revendications

1. Procédé pour améliorer les mécanismes de qualité de service (QoS) lors de l'affectation de largeur de bande passante dans des systèmes de communication mobile à accès multiple à répartition par codage (CDMA),
**caractérisé en ce qu'**un terminal d'utilisateur signale au système de communication mobile de quelle largeur de bande minimale il a besoin et le système de communication mobile affecte à une communication avec le terminal d'utilisateur, dans la mesure où elle est disponible, une largeur de bande à l'intérieur de la largeur de bande requise, et **en ce qu'**un noeud de réseau RNC (contrôleur de réseau radio) procède à l'affectation d'un support d'accès radio (RAB) et de codes suivant la largeur de bande requise, l'affectation du RAB et de la largeur de bande se faisant selon un certain nombre de règles.

2. Procédé selon la revendication 1, **caractérisé en ce que** la largeur de bande est signalée à l'intérieur du message ACTIVATE PDP CONTEXT REQUEST.

3. Procédé selon la revendication 1 ou 2,
**caractérisé en ce que** des paramètres QoS affectés sont renvoyés au terminal d'utilisateur par le noeud de réseau à l'aide du message ACTIVATE Packet Data Protocol PDP CONTEXT ACCEPT.

4. Procédé selon l'une des revendications 1 à 3, **caractérisé en ce que** les règles sont basées sur l'un au moins des paramètres d'entrée suivants : catégorie de service, largeur de bande et/ou codes disponibles, débit binaire maximal demandé et/ou débit binaire garanti demandé.

5. Procédé selon la revendication 4, **caractérisé en ce que** les règles sont fonction du temps.

6. Procédé selon la revendication 4 ou 5,
**caractérisé en ce que** les règles dépendent de l'abonnement de l'abonné et/ou du tarif appliqué.
